Europäisches Patentamt

European Patent Office

Office européen des brevets

(19)

(11) Publication number: **0 159 425**
**B1**

(12) **EUROPEAN PATENT SPECIFICATION**

(45) Date of publication of patent specification: **15.06.88**

(51) Int. Cl.⁴: **B 23 K 1/08**, H 05 K 3/34

(21) Application number: **84302611.3**

(22) Date of filing: **17.04.84**

(54) Soldering apparatus.

(43) Date of publication of application:
**30.10.85 Bulletin 85/44**

(45) Publication of the grant of the patent:
**15.06.88 Bulletin 88/24**

(84) Designated Contracting States:
**BE DE FR GB IT NL**

(58) References cited:
**GB-A-2 008 013**
**GB-A-2 117 690**

(73) Proprietor: **NIHON DENNETSU KEIKI CO., LTD.**
**27-1, Shimomaruki 2-chome**
**Ohta-ku Tokyo (JP)**

(72) Inventor: **Kondo, Kenshi c/o Nihon Dennetsu**
**Keiki Co., Ltd.**
**27-1, Shimomaruko 2-chome**
**Ohta-ku Tokyo (JP)**

(74) Representative: **Allam, Peter Clerk et al**
**LLOYD WISE, TREGEAR & CO. Norman House**
**105-109 Strand**
**London WC2R 0AE (GB)**

Courier Press, Leamington Spa, England.

## Description

This invention relates to apparatus for soldering printed circuit boards.

In response to recent demands for compact electrical appliances and instruments, there is a growing tendency to use small, thin chip-type electric parts for mounting on the printed circuit boards in place of the conventional discrete-type electric parts. From the viewpoint of the parts-mounting operation, the use of chip-type parts has the advantage over the use of discrete-type parts in that the former parts can be fixed on a board by face bonding and can be mounted in position automatically in a facilitated manner and at a relatively low cost, whereas discrete-type parts are difficult to insert into through holes of the printed circuit boards by automatic operation and their mounting involves an increased number of steps, for example, a step for cutting lead wires depending from the underside surface of the board.

In GB—A—2117690 there is disclosed apparatus for soldering a printed circuit board moving along a predetermined path of travel which is rearwardly inclined at an angle θ with respect to the horizontal plane, comprising a vessel for containing a molten solder, an upwardly extending riser having its lower end in flow communication with the vessel, and feed means operable for supplying the molten solder within the vessel to overflow from the upper open end of the riser with the underside surface of the printed circuit board being contacted with the overflowing molten solder, said riser being provided at its upper open end with a plurality of molten solder-overflowing ports arranged transversely to said path of travel so that the molten solder overflowing therefrom may form a transversely oriented standing wave having a plurality of protruded surfaces over respective overflowing ports, and said overflowing ports being moveable such that said standing wave may progress in a direction transverse to said path of travel, whereby the underside surface of the printed circuit board is contacted with the progressive wave of molten solder overflowing from the moving overflowing ports.

A somewhat similar apparatus for soldering printed circuit boards is also shown in DE—A—3205276.

However, known apparatus for soldering printed circuit boards invariably give rise to problems of soldering failures when applied to printed circuit boards bearing the chip-type parts due to the recesses defined between adjacent chip-type parts or behind the chip-type parts as seen in the direction of travel of the boards. Such recesses or space can block the molten solder from flowing thereinto and can trap gases therein, causing incomplete deposition of the solder. The air bubbles once trapped in the recesses are difficult to remove even if the printed circuit board is contacted with the molten solder for a long period of time.

In accordance with the present invention there is provided apparatus for soldering a printed circuit board moving along a predetermined path of travel, which is rearwardly inclined at an angle θ with respect to the horizontal plane, comprising a vessel for containing a molten solder, an upwardly extending riser having its lower end in flow communication with the vessel, and feed means operable for supplying the molten solder within the vessel to overflow from the upper open end of the riser with the underside surface of the printed circuit board being contacted with the overflowing molten solder, said riser being provided at its upper open end with a plurality of molten solder-overflowing ports arranged transversely to said path of travel so that the molten solder overflowing therefrom may form a transversely oriented standing wave having a plurality of protruded surfaces over rspective overflowing ports, and said overflowing ports being moveable such that said standing wave may progress in a direction transverse to said path of travel, whereby the underside surface of the printed circuit board is contacted with the progressive wave of molten solder overflowing from the moving overflowing ports, the apparatus being characterized in that said molten solder-overflowing ports are through holes formed in a cylindrical nozzle member arranged in a zig-zag fashion in parallel first and second arrays which are arranged so that the apex of the protruded surface of said progressive wave over said first array, which is located on the upstream side of said path of travel of the printed circuit board, is positioned at a lower level than the apex of said progressive wave over said second array, which is located downstream of said first array, said cylindrical nozzle member being slidably mounted on the upper open end of said riser and being moveable in a direction in parallel with the orientation of the first and second arrays.

A preferred embodiment of soldering apparatus in accordance with the present invention will now be described with reference to the accompanying drawings, in which:

Fig. 1 is a perspective view diagrammatically showing the soldering apparatus;

Fig. 2 is a cross-sectional view cut away in part and taken on line II—II of Fig. 1;

Fig. 3 is a plan view diagrammatically illustrating the details of the solder-overflowing ports of the overflow nozzle member;

Fig. 4 is a cross-sectional view taken on line IV—IV of Fig. 3;

Fig. 5(a) is a cross-sectional view taken on line V—V of Fig. 3; and

Fig. 5(b) is a cross-sectional view taken on line V'—V' of Fig. 3.

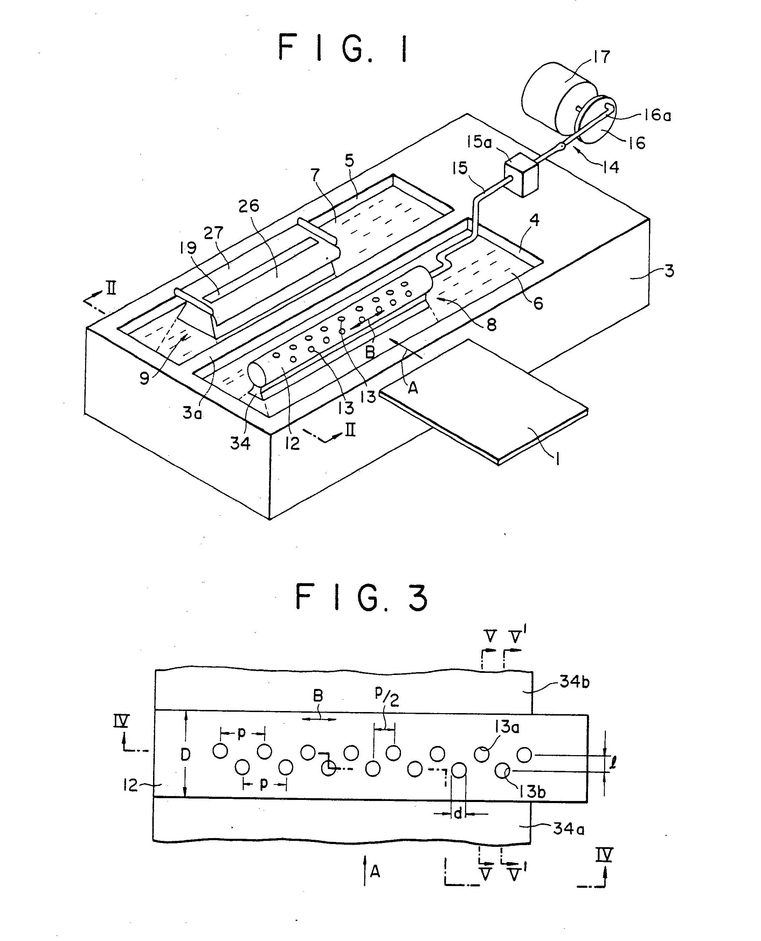

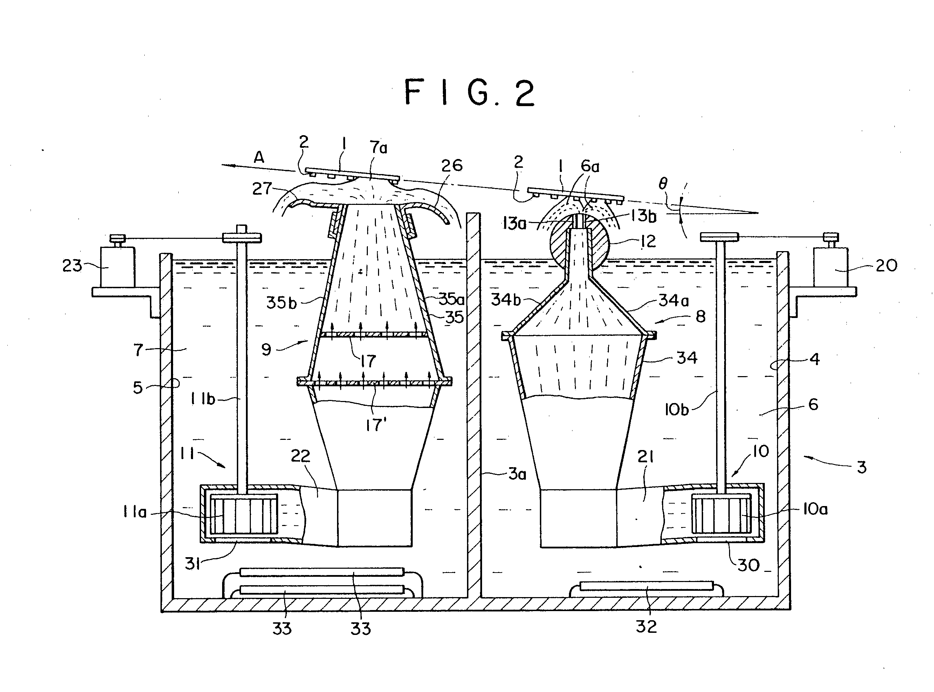

Referring first to Figs. 1 and 2, the reference numeral 3 denotes a pot which is generally rectangular in shape and which is open on the top side thereof. The pot 3 is divided by a partition wall 3a into separate first and second tanks 4 and 5 in a tandem fashion, i.e. in a direction parallel with the direction along which printed circuit boards 1 are successively moved to be soldered, indicated by the arrow A. The first and second tanks 4 and 5 contain molten solders or melts 6 and 7, respectively. The melts 6 and 7 are maintained at suitable temperatures by heating elements 32 and 33 such as electric resistance coils or the like. For example, the melt 6 in the first tank 4 is maintained at a temperature in the range of 235° to 240°C, while the melt 7 in the second tank 5 is maintained at a temperature range slightly higher than that of the melt 6, more specifically, in the range of 240° to 245°C. The melts 6 and 7 are respectively applied to printed circuit boards by first and second solder applicator means which are generally indicated by reference numerals 8 and 9.

Disposed within the first tank 4 is an upwardly extending riser 34, the lower end of which is connected to one end of a conduit 21. At the other end, the conduit 21 is provided with a molten solder supply hole 30 which is opened toward the bottom of the tank 4. Consequently, the lower portion of the riser 34 is in flow communication with the first tank 4. The riser 34 is in flow communication with the first tank 4. The riser 34 is formed in a substantially rectangular shape in section and has a sectional area gradually reducing from its middle portion toward its upper end. More specifically, of the two pairs of opposing side walls forming the riser 34, the side plates are disposed substantially in parallel with each other or slightly convergent inwardly while the front and rear plates 34a and 34b are converged towards the upper end of the riser 34.

A feed means 10 is provided in the tank 4 for continuously supplying the molten solder 6 in the first tank 4 to the riser 34. The feed means 10 preferably includes a propeller assembly 10a which is disposed within the conduit 21 adjacent to the opening 30. The propeller 10a is provided with a shaft 10b which is connected to drive means including a motor 20 so that it is rotated about the shaft 10b upon actuation of the motor 20 to supply the molten solder 6 in the first tank 4 continuously to the riser 34 and to allow the thus supplied molten solder to overflow from the upper end of the riser 34 to return to the first tank 4. The front and rear plates 34a and 34b of the riser 34 form between their upper ends a laterally extending slit on which is slidably mounted a cylindrical nozzle member 12 having a plurality of substantially equally spaced apart overflowing through holes or ports, generally designated 13, which are arranged in a direction parallel with the axis of the nozzle member 12 and which are in fluid communication with the riser 34.

The molten solder which has been introduced into the riser 34 by the feed means 10 is, thus, forced to overflow from respective ports 13 to form over the nozzle member 12 a standing wave 6a having a plurality of raised or protruded portions at positions corresponding to the overflowing ports 13.

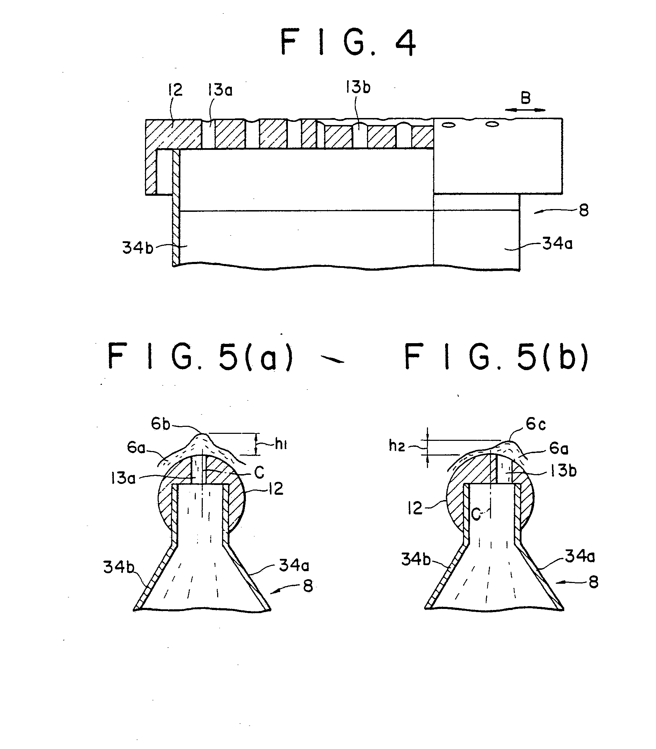

More particularly, and as shown in Figs. 3—5, the overflowing ports 13 are arranged in a zig-zag fashion in first and second parallel arrays of equally spaced apart overflowing ports 13a and 13b, respectively, with the distance between each two adjacent ports 13a and 13b being the same.

The overflowing ports 13a of the first array are provided at positions close to and on the left hand side, as viewed in Fig. 5(a), of the vertical plane C passing the axis of the cylindrical nozzle member 12, while the ports 13b of the second array are on the right hand side, as viewed in Fig. 5(b), of the plane C. As a consequence of this arrangement, the apex 6b of each of the protruded portions of the standing wave 6a formed above the ports 13a is positioned at a higher level than the apex 6c of each protrusion formed above the ports 13b ($h_1$ $h_2$).

In particular, the preferred nozzle member 12 is such that the diameter D of the nozzle member 12 is in the range of between 40 and 60 mm, the diameter d of the ports 13a and 13b is in the range of between 5 and 10 mm, the distance p between the adjacent ports in each array is in the range of between 20 and 30 mm and the distance between the first and second arrays is in the range of between 10 and 14 mm.

Drive means 14 are provided to reciprocally and slidably move the nozzle member 12 in the axial direction, i.e. in a direction transverse to the path of travel A of the printed circuit board 1, as shown by the arrow B, so that the standing wave 6a of the molten solder overflowing from the reciprocally moving ports 13 forms a progressive wave 6a progressing in the same direction as the movement of the nozzle member 12. The drive means 14 of this embodiment includes a motor 17 whose drive axis is fixedly secured to a balance wheel 16. A crank shaft 15 is slidably received by a guide 15a provided on the pot 3 and has its one end connected to the nozzle member 12 and its other end pivotally connected to a drive shaft 16a rotatably connected to the balance wheel 16. Upon rotation of the motor 17, the nozzle member 12 is reciprocally displaced. It is preferred that the nozzle member 12 displace in its every half cycle of the reciprocation through a distance substantially equal to an integer multiple of the distance between the adjacent two overflowing ports 13.

Referring still to Figs. 1 and 2, the printed circuit boards 1 each having chip-type electric parts 2 temporarily attached to its lower side by means of an adhesive or the like are fed from right to left, as viewed in Fig. 2, or in the direction of the arrow A, along the predetermined path of travel by operation of conventional transfer means. In this instance, it is preferred that the printed circuit board 1 travel in a rearwardly inclined posture and along a similarly inclined path of travel at an angle of with respect to the horizontal plane so that the molten solder excessively applied to the board can drop in a facilitated manner. Correspondingly, in this case it is especially preferred that the positional relationship between the first and second arrays of the ports 13a and 13b is such that the plane through the apices 6b and 6c of the protruded portions of the standing wave 6a is also inclined by the angle θ, namely inparallel with the inclined path of travel of the circuit board.

As the printed circuit board 1 passes over the first solder applicator 8, its lower side is brought into contact with the progressive wave 6a of molten solder for soldering the parts on the underside of the printed circuit board 1. Since the upper surface of the solder wave 6a is continuously moved in a direction transverse to the direction of the travel of the printed circuit board 1, the molten solder can arrive at the recessed portions of the chip parts-bearing printed circuit board 1 in an accelerated manner without permitting gases to be trapped in those portions.

The printed circuit board 1 which has undergone the soldering treatment with the molten solder 6 in the first solder applicator 8 is then passed to the adjacently located second applicator 9 for contact with the second molten solder 7 which is generally maintained at a higher temperature than that of the first melt 6. The second solder applicator 9 may be arranged in the same manner as the above-described first applicator 8, if desired. However, it is preferred that the second applicator 9 be of the type which is adapted to overflow the molten solder to form a standing wave 7a running in front and rear directions as shown particularly in Fig. 2.

The second solder applicator 9 of Figs. 1 and 2 is provided with an upwardly extending riser 35 disposed within the second tank 5. The lower end of the riser 35 is connected to one end of a conduit 22 and communicates directly with the second tank 5 through a solder feed port 31 which is opened toward the bottom of the second tank 5 at the other end of the conduit 22. The riser 35 is substantially rectangular in section and has a sectional area gradually reducing from its middle portion toward its upper end. More specifically, the riser 35 is constituted by a pair of substantially parallel side plates and a pair of upwardly converging side plates 35a and 35b forming a laterally extending opening 19.

The second applicator 9 is provided with a solder feeder 11 similar to the feeder 10 of the first applicator 8 and including a propeller 11a which is driven from a motor 23 to rotate about a shaft 11b for supplying the molten solder 7 in the tank 5 to the riser 35 through the opening 31. The front and rear plates 35a and 35b of the riser 35 are inclined substantially symmetrically as shown in the drawing and provided with guide members 26 and 27 at the respective upper ends. Thus, the molten solder 7 which is forced to flow upwardly through the riser 35 flows out from the upper end of the riser, forming a standing wave 7a of molten solder flowing on two opposite sides with its transversely extending center portion being slightly protruded. The overflown solder returns to the tank 5. The lower side of the printed circuit board 1 is contacted with the center portion of the standing wave 7a to effect a second soldering treatment. The electric components 2 which have their respective rear portions sufficiently soldered in the soldering treatment of the first stage are completely connected to the circuits of the board 1 by the soldering treatment of the second stage both mechanically and electrically. Moreover, the first stage treatment can serve as a preheated step for the second soldering stage and, hence, the soldering treatment in the second stage can be performed effectively without exerting thermal stresses on the electric components on the board. Denoted at 17 and 17' are perforated plates for controlling uniform upward flows of the molten solder 7 through the riser 35, across the width thereof.

## Claims

1. Apparatus for soldering a printed circuit board (1) moving along a predetermined path of travel (A) which is rearwardly inclined at an angle θ with respect to the horizontal plane, comprising a vessel (4) for containing a molten solder (6), an upwardly extending riser (34) having its lower end in flow communication with the vessel (4), and feed means (10) operable for supplying the molten solder (6) within the vessel (4) to overflow from the upper open end of the riser (34) with the underside surface of the printed circuit board (1) being contacted with the overflowing molten solder, said riser (34) being provided at its upper open end with a plurality of molten solder-overflowing ports (13) arranged transversely to said path of travel (A) so that the molten solder overflowing therefrom may form a transversely oriented standing wave (6a) having a plurality of protruded surfaces (13) over respective overflowing ports, and said overflowing ports (13) being moveable such that said standing wave (6a) may progress in a direction transverse to said path of travel (A), whereby the underside surface of the printed circuit board (1) is contacted with the progressive wave (6a) of molten solder overflowing from the moving overflowing ports, characterized in that said molten solder-overflowing ports are through holes (13a, 13b) formed in a cylindrical nozzle member (12) and arranged in a zig-zag fashion in parallel first and second arrays which are arranged so that the apex (6c) of the protruded surface of said progressive wave over said first array, which is located on the upstream aide of said path of travel (A) of the printed circuit board (1), is positioned at a lower level than the apex (6b) of said progressive wave over said second array, which is located downstream of said first array, said cylindrical nozzle member (12) being slidably mounted on the upper open end of said riser (34) and being moveable in a direction in parallel with the orientation of the first and second arrays.

2. Apparatus as set forth in Claim 1, wherein the plane through said apices (6b, 6c) of the protruded surfaces of said progressive wave also is inclined at the angle θ with respect to the horizontal plane.

3. Apparatus as set forth in Claim 1 or Claim 2, wherein the following dimensions apply:

(a) the diameter (D) of said cylindrical nozzle member (12) is between 40 and 60 mm;

(b) the diameter (d) of said through holes (13a, 13b) is between 5 and 10 mm;

(c) the distance (p) between adjacent through holes (13a or 13b) in each said array is between 20 and 30 mm; and

(d) the distance (l) between said first and second arrays is between 10 and 14 mm.

4. Apparatus as set forth in any preceding claim, further comprising means (9) for applying a second molten solder (7) contained in a second vessel (5) to the printed circuit board (1) which has been subjected to the soldering treatment by contact with said progressive wave (6a).

## Patentansprüche

1. Einrichtung zum Löten einer gedruckten Schaltung (1), die sich entlang eines vorgegebenen Weges (A) bewegt, der rückwärtig gegenüber der horizontalen Ebene unter einem Winkel θ geneigt ist mit einem Behälter (4) zur Aufnahme des geschmolzenen Lotes (6), einem sich nach oben erstreckenden Steigtrichter (34), dessen unteres Ende in Durchflußverbindung mit dem Behälter (4) steht und durch Zuführungsmittel (10) zur Zuführung des geschmolzenen Lotes (6) in den Behälter, so daß es das obere offene Ende des Steigtrichters (34) überfließt, wobei die Unterseite der gedruckten Schaltung mit dem geschmolzenen Lot kontaktiert wird, wobei der Steigtrichter (34) an seinem oberen offenen Ende mit einer Mehrzahl von Überlauföffnungen (13) für das geschmolzene Lot versehen ist, die quer zum Weg (A) angeordnet sind, so daß das übverfließende geschmolzene Lot eine quer stehende Welle (6a) bilden kann, die eine Mehrzahl über den entsprechenden Überlauföffnungen vorstehender Oberflächen bildet und wobei die Überlauföffnungen (13) derart bewegbar sind, daß die stehende Welle (6a) in Richtung quer zum Weg (A) fortschreitet, wodurch die Unterseite der gedruckten Schaltung (1) mit der fortschreitenden Welle (6a) des geschmolzenen Lotes, das die sich bewegenden Überlauföffnungen überfließt, kontaktiert wird, dadurch gekennzeichnet, daß die Überlauföffnungen für das geschmolzene Lot Durchgangsbohrungen (13a, 13b) in einem zylindrischen Düsenteil (12) sind, die in Zick-Zack-Form in parallelen ersten und zweiten Reihen derart angeordnet sind, daß der Scheitel (6c) der vorstehenden Oberflächen der progressiven Welle über den ersten Reihen, die sich stromaufwärts des Weges (A) der gedruckten Schaltung befindet, auf einem niedrigeren Niveau liegt als der Scheitel (6b) der progressiven Welle über der zweiten Reihe, die sich stromabwärts der ersten Reihe befindet und daß das zylindrische Düsenteil (12) gleitend auf dem oberen offenen ende des Steigtrichters (34) angeordnet und in Richtung parallel zu der Ausrichtung der ersten und zweiten Reihe bewegbar ist.

2. Einrichtung nach Anspruch 1, wobei die Ebene durch die Scheitel (6b, 6c) der forstehenden Oberflächen der progressiven Welle ebenfalls im Winkel θ bezogen auf die horizontale Ebene geneigt ist.

3. Einrichtung nach Anspruch oder 2, wobei die folgenden Dimensionen zur Anwendung kommen:

a) der Durchmesser (D) des zylindrischen Düsenteils (12) liegt zwischen 40 und 60 mm;

b) der Durchmesser (d) der Durchgangsbohrungen (13a, 13b) liegt zwischen 5 und 10 mm;

c) die Entfernung (p) zwischen benachbarten Löchern (13a oder 13b) liegt in jeder Reihe zwischen 20 und 30 mm und

d) die Entfernung (l) zwischen der ersten und zweiten Reihe liegt zwischen 10 und 14 mm.

4. Einrichtung nach einem der vorstehenden Ansprüche, wobei ferner Mittel (9) zum Aufbringen eines zweiten geschmolzenen Lotes (7), das sich in einem zweiten Behälter (5) befindet, auf die gedruckte Schaltung (1) vorgesehen sind, die der Lötbehandlung durch Kontakt mit der progressiven Welle (6a) ausgesetzt waren.

## Revendications

1. Appareil de soudage d'une plaquette (1) de circuit imprimé se déplaçant suivant un trajet prédéterminé (A) incliné vers l'arrière suivant un angle θ par rapport au plan horizontal, comprenant un réservoir (4) destiné à contenir de la soudure fondue (6), une colonne montante (34) dirigée vers le haut et dont l'extrémité inférieure communique avec le réservoir (4), et un dispositif (10) d'alimentation destiné à transmettre la soudure fondue (6) placée dans le réservoir (4) de manière qu'elle déborde à l'extrémité supérieure ouverte de la colonne (34), la face inférieure de la plaquette (1) de circuit imprimé étant mise au contact de la soudure fondue qui déborde, la colonne (34) ayant, à son extrémité supérieure ouverte, plusieurs orifices (13) de débordement de soudure fondue disposés transversalement au trajet (a) afin qui la soudure fondue qui en déborde puisse former une vague stationnaire (6a) orientée transversalement, ayant plusieurs surfaces en saillie (13) formées au-dessus d'orifices respectifs de débordement, les orifices (13) de débordement étant mobiles afin que la vague stationnaire (6a) puisse progresser en direction transversale au trajet de déplacement (A), la face inférieure de la plaquette (1) de circuit imprimé étant ainsi mise au contact de l'onde mobile (6a) de soudure fondue qui déborde par les orifices de débordement qui se déplacent, caractérisé en ce que les orifices de débordement de soudure fondue sont des trous débouchants (13a, 13b) formés dans un organe cyclindrique (12) de buse et disposés sous forme sinueuse en un premier et un second arrangement qui sont parallèles et qui sont disposés de manière que le sommet (6c) de la surface en saillie de la vague mobile formée au-dessus du premier arrangement, placé en aval du trajet (A) de déplacement de la plaquette (1) de circuit imprimé se trouve à un niveau inférieur à celui du sommet (6b) de la vague mobile formée au-dessus du second arrangement qui est placé en aval du premier arrangement, l'organe cyclidrique (12) à buse étant monté afin qu'il puisse coulisser sur l'extrémité supérieure ouverte de la colonne montante (34) et étant mobile en direction parallèle à l'orientation du premier et du second arrangement.

2. Appareil selon la revendication 1, dans lequel le plan passant par les sommets (6b, 6c) des surfaces en saillie de la vague mobile est aussi incliné de l'angle θ par rapport au plan horizontal.

3. Appareil selon l'une des revendications 1 et 2, dans lequel les dimensions suivantes sont utilisées:

(a) le diamètre (D) de l'organe cylindrique (12) à buse est compris entre 40 et 60 mm,

(b) le diamètre (d) des trous débouchants (13a, 13b) est compris entre 5 et 10 mm,

(c) la distance (p) comprise entre les tous débouchants adjacents (13a ou 13b) dans chaque arrangement est comprise entre 20 et 30 mm, et

(d) la distance (l) comprise entre le premier et le second arrangement est comprise entre 10 et 14 mm.

4. Appareil selon l'une quelconque des revendications précédentes, comprenant en outre un dispositif (9) destiné à appliquer une seconde soudure fondue (7) logée dans un second réservoir (5) à la plaquette (1) de circuit imprimé qui a été soumise au traitement de soudage par contact avec la vague mobile (6a).

# F I G. I

# F I G. 3

F I G. 2

# F I G. 4

# F I G. 5(a) ～ F I G. 5(b)